**Europäisches Patentamt**

**European Patent Office**

**Office européen des brevets**

(19)

(11) Veröffentlichungsnummer: **0 040 296**
**A1**

(12)

# EUROPÄISCHE PATENTANMELDUNG

(21) Anmeldenummer: **81101598.1**

(22) Anmeldetag: **06.03.81**

(51) Int. Cl.³: **G 03 B 15/02**
**F 21 L 1/00, F 21 P 5/00**
**F 21 V 29/00**

(30) Priorität: **13.05.80 DE 8012919 U**

(43) Veröffentlichungstag der Anmeldung:
**25.11.81 Patentblatt 81/47**

(84) Benannte Vertragsstaaten:
**AT BE CH FR GB IT LI NL SE**

(71) Anmelder: **REFLECTA GMBH FOTO FILM PROJEKTION**
**Berlichingenstrasse 9**
**D-8540 Schwabach(DE)**

(72) Erfinder: **Weinberg, Ulli**
**An der Gredl 2**
**D-8540 Roth(DE)**

(74) Vertreter: **LOUIS, PÖHLAU, LOHRENTZ & SEGETH**
**Kesslerplatz 1**
**D-8500 Nürnberg(DE)**

(54) Filmleuchte.

(57) Bei einer Filmleuchte mit einer vor dem Reflektor (12) angeordneten Schutzhaube (16) erweisen sich das durch die Löcher des Korbrahmens (28) dringende Streulicht und die erfolgende Wärmeabgabe als störend. Zur Vermeidung dieser nachteiligen Auswirkungen wird vorgeschlagen, dass aussen im Abstand um den Korbrahmen (28) herumverlaufend eine geschlossene Abschirmung (32) ausgebildet ist.

EP 0 040 296 A1

./...

FIG.1

FIG.2

- 1 -

## Filmleuchte

Die Erfindung betrifft eine Filmleuchte mit einer vor dem Reflektor angeordneten Schutzhaube mit einem auf der dem Reflektor zugewandten Seite offenen und auf der dem Reflektor abgewandten Seite mit einem Panzerglas verschlossenen Korbrahmen.

Solche Schutzhauben stellen sicher, dass im Falle einer Explosion des Brenners weder Personen noch Sachen zu Schaden kommen. Sie verringern ausserdem die Brandgefahr, wenn die Filmleuchte nach ihrem Betrieb mit dem Reflektor nach unten weisend abgelegt wird.

- 2 -

Die Verwendung eines Korbrahmens anstelle einer geschlossenen Abschirmung ist im Hinblick auf die erforderliche Wärmeabfuhr notwendig. Jedoch erweist sich das durch die Löcher des Korbrahmens dringende Streulicht oftmals als störend. Ebenso wird die durch die Löcher im Korbrahmen stattfindende Wärmeabgabe als nachteilig empfunden, da sich das Hantieren mit der Leuchte unter Umständen erschwert. Dies gilt insbesondere für Leuchten, die mit einem Ventilator ausgerüstet sind, der für einen durch die Löcher des Korbrahmens hindurchtretenden Heissluftstrom verantwortlich ist.

Der Erfindung liegt nun die Aufgabe zugrunde, die durch die Löcher im Korbrahmen der eingangs genannten Leuchte bedingten Probleme weitgehend zu vermeiden.

Diese Aufgabe wird erfindungsgemäss dadurch gelöst, dass aussen im Abstand um den Korbrahmen herumverlaufend eine geschlossene Abschirmung ausgebildet ist.

Die Abschirmung verhindert, wie nicht näher erläutert werden muss, ein seitliches Austreten von Streulicht. Ebenso verhindert die Abschirmung die Abgabe von Wärme in seitlicher Richtung und hat überdies den Vorteil, dass der im Betrieb heisse Korbrahmen vor Berührung geschützt wird, so dass die Gefahr von Verbrennungen praktisch ausgeschlossen wird. Aber abgesehen davon, dass die Abgabe von Streulicht und Wärme in seitlicher Richtung durch die Abschirmung verhindert wird, hat die Abschirmung auch noch den Vorteil, dass - handelt es sich um eine Filmleuchte mit Ventilator und den Stahlkegel der Filmleuchten einschränkenden Lichtklappen - die Lichtklappen aufgrund der Umlenkung der durch den Ventilator verursachten Luftströmung gekühlt werden. Sie bleiben also selbst im Dauerbetrieb relativ kühl.

Zweckmässigerweise ist der Korbrahmen zwischen zwei Rahmenteilen festgehalten, von denen das dem Reflektor zugewandte Rahmenteil einstückig mit der Abschirmung ausgebildet ist.

Dabei kann das Korbblech in dem dem Reflektor zugewandten Rahmenteil des Korbrahmens in einer umlaufenden U-förmigen Eindrückung eingesetzt sein, während es an dem anderen Rahmenteil zwischen dem Panzerglas und einem den Rand des Panzerglases umgreifenden Flansch gehalten ist. Diese Ausführung ist sowohl von der Montage her als auch im Hinblick auf die hohen Betriebstemperaturen von Vorteil.

- 4 -

Weitere Vorteile, Merkmale und Einzelheiten der Erfindung ergeben sich aus der nachstehenden, anhand der beiliegenden Zeichnung erfolgenden Beschreibung eines bevorzugten Ausführungsbeispieles.

In der Zeichnung stellen dar:

Figur 1   eine Vorderansicht einer erfindungsgemässen Filmleuchte, und

Figur 2   einen Schnitt durch einen Teil des Korbrahmens der Filmleuchte der Figur 1.

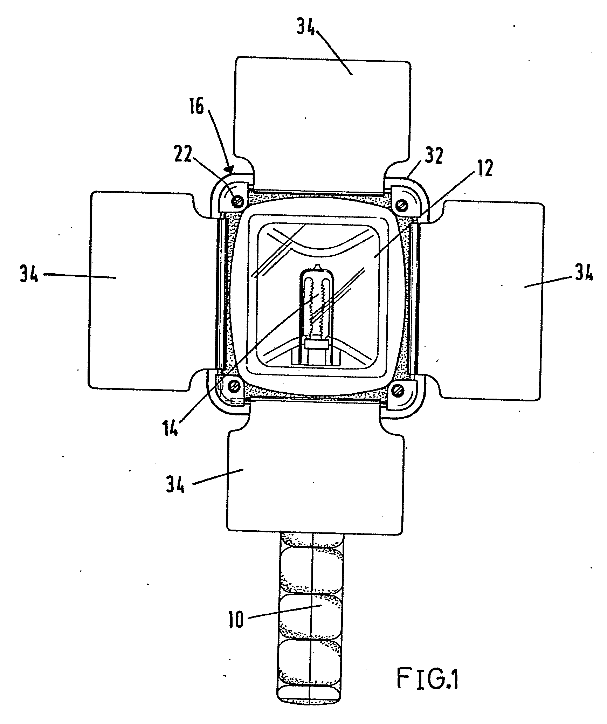

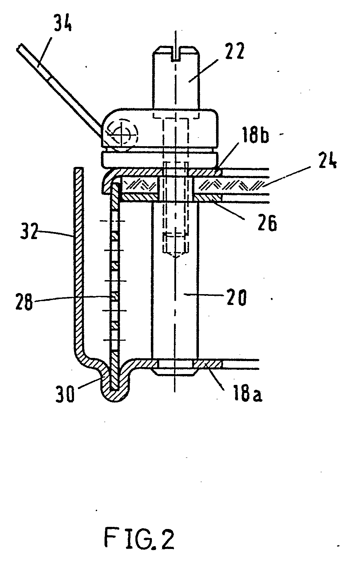

In Figur 1 ist eine Filmleuchte mit einem Handgriff 10, einem Reflektor 12 mit einem Brenner 14 und einer vor dem Reflektor 12 angeordneten Schutzhaube 16 gezeigt. Die Schutzhaube 16 besteht aus einem Korbrahmen mit zwei der Grösse des Reflektors 12 entsprechenden Rahmenteilen 18a und 18b (siehe Figur 2), die durch vier an den Ecken angeordnete Abstandshalter 20 voneinander auf Abstand gehalten sind, in die, wie in Figur 2 dargestellt, Befestigungsschrauben 22 einschraubbar sind, die auf das vom Reflektor abgewandte Rahmenteil 18b einwirken. Zwischen dem Rahmenteil 18b und dem Abstandshalter 20 befindet sich die Panzerglasscheibe 24 der Schutzhaube 16, wobei der Abstandsh lter 20

nicht direkt an der Panzerglasschreibe 24 anliegt, sondern ein umlaufendes Blechteil 26
zwischengeschaltet ist, wie ebenfalls in Figur 2 dargestellt. Das um den Reflektor 12
umlaufende Korbblech 28 wird einerseits von
einem am Aussenrand umlaufenden Flansch des
Rahmenteiles 18b und der Panzerglasscheibe 24
und andererseits von einer im Querschnitt U-
förmigen umlaufenden Eindrückung 30 im Rahmenteil 18a, wie gezeigt, gehalten. In diesem Zusammenhang ist hervorzuheben, dass die mechanischen Verbindungen nur durch Klemmung bewirkt
werden, die jederzeit mit Hilfe der Schrauben
22 nachstellbar sind, so dass durch Temperaturschwankungen bedingte Lockerungen jederzeit
wieder beseitigt werden können.

Wie in den Figuren 1 und 2 dargestellt, ist eine
Abschirmung 32 einstückig mit dem Rahmenteil 18a
der Schutzhaube 16 ausgebildet und läuft aussen
in einem Abstand um das Korbblech 28 herum, wobei
die aus dem Korbblech austretende Luft nach vorne
in Strahlrichtung abgelenkt wird und vorne austreten kann. Hinten, also auf der der Bedienungsperson zugewandten Seite der Filmleuchte, ist jedoch die Abschirmung geschlossen. Die aus den
Löchern im Korbblech 28 austretende Heissluft
kann daher nicht gegen die Bedienungsperson geblasen werden.

- 6 -

In der Zeichnung sind auch noch Lichtklappen 34 dargestellt, die in der Ruhestellung auf die Panzerglasscheibe 24 klappbar sind und in der Betriebsstellung aufgeklappt werden. Die erfindungsgemässe Abschirmung 32 hat nun den Vorteil, dass die beispielsweise durch einen Ventilator in der Filmleuchte und durch die Löcher im Korbblech 28 hindurchtretende Luftströmung gegen die geöffneten Lichtklappen 34 gerichtet wird und diese kühlt.

Die Abschirmung verhindert aber auch ein Berühren des besonders stark erhitzten Korbbleches 28 und vermeidet, dass Streulicht seitlich austreten kann.

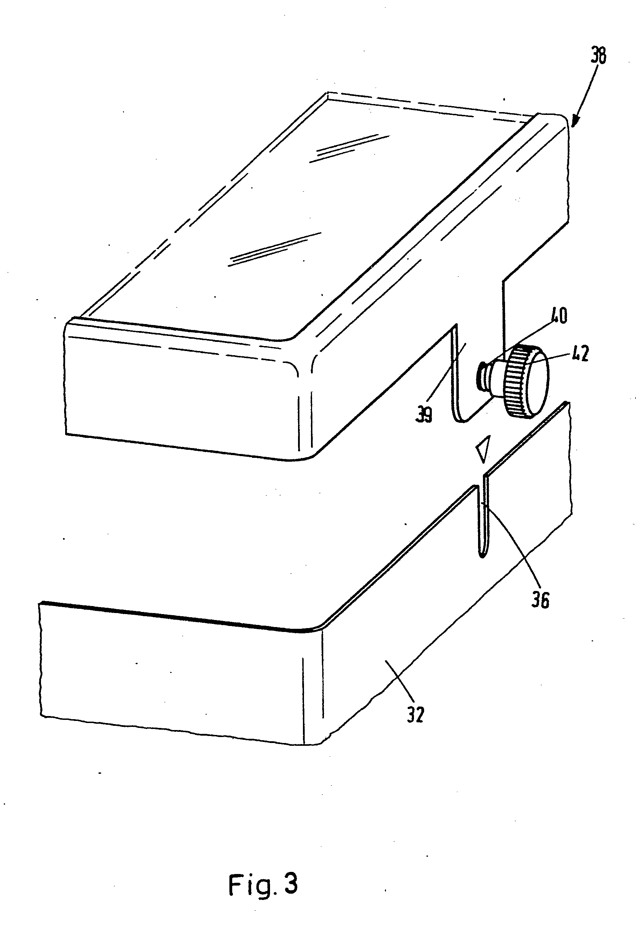

In Figur 3 ist perspektivisch ein Teil der Abschirmung 32 sowie ein Teil einer Aufsatzeinrichtung 38 dargestellt, die beispielsweise ein Rahmen mit auswechselbaren Lichtfiltern sein kann. Die Aufsatzeinrichtung 38 kann aber auch beispielsweise Lichtklappen, ähnlich der in Figur 1 dargestellten Lichtklappen 34, aufweisen. Die Abschirmung 32 erlaubt eine verhältnismässig einfache Befestigung von Aufsatzeinrichtungen in lösbarer Weise, wenn gemäss einem weiteren Merkmal der Erfindung an mindestens zwei gegenüberliegenden Aussenrändern der Abschirmung 32 Einschnitte 36 vorgesehen werden und, wie in Figur 3 schematisch angedeutet, an zwischen dem Korb-

- 7 -

rahmen 38 und der Abschirmung 32 greifenden
Laschen 39 Schraubbolzen 40 vorgesehen werden, die in die Einschnitte 36 einsetzbar
sind. Die Aufsatzeinrichtung 38 kann dann mit
Hilfe von Rändelmuttern 42 an der Abschirmung
32 festgeklemmt werden. Auf diese Weise dient
die Abschirmung auch noch als Mittel zur lösbaren Befestigung von austauschbaren Aufsatzeinrichtungen.

- 1 -

Patentansprüche

1.    Filmleuchte mit einer vor dem Reflektor angeordneten Schutzhaube mit einem auf der dem Reflektor zugewandten Seite offenen und auf der dem Reflektor abgewandten Seite durch ein Panzerglas verschlossenen Korbrahmen, d a d u r c h   g e k e n n z e i c h n e t , dass aussen im Abstand um den Korbrahmen (28) herumverlaufend eine geschlossene Abschirmung (32) ausgebildet ist.

2.    Filmleuchte nach Anspruch 1, d a d u r c h   g e k e n n z e i c h n e t , dass das Korbblech (28) des Korbrahmens zwischen zwei Rahmenteilen (18a, 18b) festgehalten ist, von denen das dem Reflektor zugewandte

- 2 -

Rahmenteil (18) einstückig mit der Abschirmung
(32) ausgebildet ist.

3.    Filmleuchte nach Anspruch 2,
d a d u r c h   g e k e n n z e i c h n e t ,
dass das Korbblech (28) in dem dem Reflektor (12)
zugewandten Rahmenteil (18a) des Korbrahmens (28)
in einer umlaufenden, im Querschnitt U-förmigen
Eindrückung (30) eingesetzt ist.

4.    Filmleuchte nach einem der Ansprüche 1 bis 3,
d a d u r c h   g e k e n n z e i c h n e t ,
dass die abgeschlossene Abschirmung (32) an gegenüberliegenden Aussenrändern jeweils einen Einschnitt (36) aufweist, und dass zwischen dem
Korbrahmen (28) und der geschlossenen Abschirmung (32) greifende Aufsatzeinrichtungen (38)
auf gegenüberliegenden Seiten in die Einschnitte
(36) einsetzbare Schraubbolzen (40) zur lösbaren
Befestigung der Aufsatzeinrichtungen an der umlaufenden Abschirmung (32) aufweisen.

0040296

FIG.1

FIG.2

0040296

Fig. 3

**0040296**

Nummer der Anmeldung

EP 81 10 1598.1

Europäisches
Patentamt

## EUROPÄISCHER RECHERCHENBERICHT

| | EINSCHLÄGIGE DOKUMENTE | | |
|---|---|---|---|
| Kategorie | Kennzeichnung des Dokuments mit Angabe, soweit erforderlich, der maßgeblichen Teile | betrifft Anspruch | |
| A | DE - U - 7 827 346 (K. BERTRAMS FEIN-MECHANIK) <br> * Fig. 1, 2 * <br> -- | 1 | |
| A | DE - U - 7 823 183 (PATENT-TREUHAND-GESELLSCHAFT FÜR ELEKTRISCHE GLÜHLAMPEN) <br> * Fig. 1 * <br> -- | 1 | |
| A | DE - U - 7 424 426 (KAISER FOTOTECHNIK) <br> * Fig. 1 * <br> -- | 1 | |
| A | DE - U - 1 704 191 (G. BAUER) <br> * Fig. 1 bis 7 * <br> ---- | | |

**KLASSIFIKATION DER ANMELDUNG (Int. Cl.³)**

G 03 B 15/02
F 21 L 1/00
F 21 P 5/00
F 21 V 29/00

**RECHERCHIERTE SACHGEBIETE (Int. Cl.³)**

F 21 L 1/00
F 21 P 5/00
F 21 V 29/00
G 03 B 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-08-1981 | HOPPE |

EPA form 1503.1  06.78